# EUROPÄISCHE PATENTSCHRIFT

(11) **EP 1 647 756 B1**
(45) Veröffentlichungstag und Bekanntmachung des Hinweises auf die Patenterteilung: **02.11.2011**
(21) Anmeldenummer: 05109249.2
(22) Anmeldetag: 05.10.2005
(51) Int. Cl.: F16L 33/00, F16L 37/14, F16L 55/115, F16L 21/08

(54) **Leitung eines Spritzgestänges**
Spraying boom conduit
Conduite d'une rampe de pulvérisation

(30) Priorität: 13.10.2004 DE 102004049847
(43) Veröffentlichungstag der Anmeldung: 19.04.2006
(73) Patentinhaber: John Deere Fabriek Horst B.V., 5961 PT Horst (NL)
(72) Erfinder: Beeren, Joseph Marie Henrie, 5961 SB, Horst (NL); Grotenberg, Casper, 5961 KH, Horst (NL)
(74) Vertreter: Holst, Sönke

(56) Entgegenhaltungen:
- EP-A- 1 316 752
- DE-A1- 3 439 522
- FR-A- 2 438 193
- US-A- 3 655 164
- US-A- 5 833 007
- US-A1- 2003 052 484

## Beschreibung

Die Erfindung betrifft eine Spritzengestängeleitung, umfassend wenigstens ein einen Anschlussbereich aufweisendes Rohr und wenigstens einen Anschlussteil, wobei der Anschlussbereich mit dem Anschlussteil verbunden ist und der Anschlussbereich mit einer ersten nach außen gerichteten Sicke ausgebildet ist, mit welcher der Anschlussteil in Eingriff tritt.

Im Stand der Technik sind Spritzengestänge bekannt, die mit Rohren versehene Leitungen umfassen. Die Rohre weisen Anschlussbereiche auf, die mit sogenannten Schnellkupplern versehen sind. Die Schnellkuppler umfassen beispielsweise eine Schlauchtülle oder ein Anschlussteil, welches auf ein mit dem Rohr verbundenes, beispielsweise verklebtes, Kupplungsstück gesteckt wird, wobei das Kupplungsstück mit einer Ringnut versehen ist, welche einen an der Schlauchtülle vorgesehenen Stecker oder Splint aufnehmen kann. Durch den Stecker bzw. Splint wird die Schlauchtülle auf dem Kupplungsstück axial gesichert. Derartige Spritzgestänge werden beispielsweise an landwirtschaftlichen Spritzen der Firma Deere & Company verwendet (siehe Prospekt "John Deere Anhängefeldspritzen, 824 - 832 - 840"; Seite 18, Druckvermerk: YY0314750D, 10/03).

Das Verbinden des Kupplungsstückes mit dem Rohr stellt sich problematisch dar, da das Verbinden des Kupplungsstücks mit dem Rohr, beispielsweise durch Verkleben oder Verschweißen, zeitintensiv ist und einen hohen Fertigungsaufwand erfordert.

EP 1 316 752 A1 offenbart eine Verbindungsvorrichtung für gewellte Rohre, mit der ein gewelltes oder flexibles Rohr mit einem Verbindungsstück verbunden wird. Das Rohr weist mehrere auf der Außenseite des Rohres über seine Länge angeordnete Ausbuchtungen (Wellen) auf, die nach einem Ziehharmonikaprinzip dazu dienen das Rohr in seiner Länge und Ausrichtung flexibel verändern zu können. Bei der offenbarten Verbindungseinrichtung werden die Ausbuchtungen genutzt, um Dichtungselemente zu fixieren, die mit der Innenwandung des Verbindungsstücks in Eingriff treten. Ferner dient ein u-förmiger Splint zur axialen Fixierung des Verbindungsstücks an das flexible Rohr. Die offenbarte Verbindungsvorrichtung ist jedoch speziell auf gewellte, flexible Rohre ausgerichtet, welche im Bereich von Spritzengestängeleitungen keine Anwendung finden und daher für diese ungeeignet ist.

Die der Erfindung zugrunde liegende Aufgabe wird darin gesehen, eine Leitung der eingangs genannten Art anzugeben, durch welche die vorgenannten Probleme überwunden werden.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Leitung der eingangs genannten Art derart ausgebildet, dass der Anschlussbereich des Rohres mit einer zweiten Sicke versehen ist, wobei die zweite Sicke zwischen der ersten Sicke und einer Öffnung des Rohres angeordnet und nach innen gerichtet ist. Bei der ersten Sicke kann es sich um eine profilierte Vertiefung handeln, die vorzugsweise über den gesamten Umfang des Rohres ausgebildet ist und eine nach außen gerichtete ringförmige Ausbuchtung darstellt. Vorzugsweise handelt es sich um dünnwandige Rohre, die durch einfache Blechumformung bzw. durch Umformverfahren umformbar sind. Dabei können auch Kunststoffrohre eingesetzt werden, die in einem entsprechenden Umformverfahren mit den Sicken ausgebildet werden oder beispielsweise auch durch ein Spritzgussverfahren mit den Sicken versehen sind. Die Sicken sind vorzugsweise derart auszubilden, dass eine Ausbuchtung auf der Außenseite des Rohres mit einer Einbuchtung auf der Innenseite des Rohres, oder umgekehrt einhergeht. Die Ausbildung der ersten Sicke kann dabei ähnliche Konturen annehmen, wie die an den aus dem Stand der Technik bekannten Kupplungsstücken eingebrachten Rillen bzw. Ringe, so dass der Anschlussbereich des Rohres bereichsweise die Form eines Kupplungsteils annehmen kann. Dadurch, dass der Anschlussbereich des Rohres mit einer Sicke versehen ist, können aufwändige Verbindungen mit Kupplungsstücken vermieden werden, da ein Anschlussteil direkt auf den Anschlussbereich befestigbar ist. Somit können Teile eingespart und die Montage bzw. der Fertigungsaufwand der Leitung vereinfacht werden. Die Sicke stellt eine Erhebung in Form einer ringförmigen Ausbuchtung dar, die sich über den gesamten Umfang des Anschlussbereiches des Rohres erstreckt. Vorzugsweise ist die Sicke auf einer von einer Öffnung des Rohres abgewandten Seite derart ausgebildet, dass sie eine Anlagefläche aufweist bzw. eine schroffe Durchmesseränderung an der Außenseite des Rohres darstellt. Die Sicke, die durch Umformen des Anschlussbereichs des Rohres ausgebildet wird, kann beispielsweise auch als ringförmiger Absatz auf der Außenseite des Anschlussbereichs ausgebildet sein. Die Sicke ist vorzugsweise radial in Außenrichtung zur Längsachse des Rohres eingeformt. Der Anschlussbereich ist mit einer oder mehreren weiteren Sicken versehen, die zwischen der ersten Sicke und einer Öffnung des Rohres angeordnet und nach innen gerichtet sind. Die weiteren Sicken sind dabei derart ausgebildet, das sich auf der Außenseite des Rohres eine Ringnut ausbildet. Es ist jedoch auch möglich, eine oder mehrere dieser Sicken nach außen zu richten. Hierbei ist es ebenfalls denkbar eine Ringnut durch zwei nach außen gerichtete Sicken auszubilden. Der Anschlussbereich des Rohres wird von einem Anschlussteil aufgenommen, welches den Anschlussbereich über den Umfang geschlossen umschließt und mit der ersten Sicke in Eingriff tritt. Durch den Eingriff mit der ersten Sicke kann der Anschlussteil auf dem Anschlussbereich axial und gegebenenfalls auch radial fixiert werden. Ein Innendurchmesser des Anschlussteils und ein Außendurchmesser der Sicke können derart aufeinander angepasst sein, dass sie miteinander eine Presspassung eingehen und eine Abdichtung über einen Umfang des Anschlussbereichs bilden. Eine Innenfläche des Anschlussteils kann auch derart ausgebildet sein, dass sie mit einer vorgesehenen Dichtung in einer weiteren Sicke in Kontakt tritt, so dass zwischen Anschlussteil und Anschlussbereich des Rohres eine Abdichtung erfolgt. Durch Einbringen der zweiten oder weiteren Sicke zwischen der Öffnung und der ersten Sicke wird eine besonders einfache und preiswerte Möglichkeit zur Abdichtung des Anschlussbereichs geschaffen.

Die zwischen der ersten Sicke und der Öffnung angeordnete Sicke dient vorzugsweise zur Aufnahme eines Dichtrings. Dabei kann es hilfreich sein, mehrere mit Dichtringen versehene Sicken anzuordnen, um gegebenenfalls eine Dichtigkeit des Anschlussbereichs zu erhöhen.

Bei dem Anschlussteil kann es sich beispielsweise um einen Schlauch bzw. um eine elastisch verformbare Leitung handeln, die über den Anschlussbereich geschoben wird und mit der ersten Sicke einen Pressverbund bildet. Als Sicherung dieser Verbindung kann beispielsweise ein Spannring oder eine Schlauchschelle oder dergleichen vorgesehen sein. Dadurch kann der Schlauch zusätzlich, vorzugsweise hinter der ersten Sicke (ausgehend von der Öffnung des Rohres) auf dem Rohr axial gesichert werden.

Der Anschlussteil kann des Weiteren auch als Schlauchtülle ausgebildet sein, beispielsweise als solche, wie sie bereits im Stand der Technik bei Schnellkupplern vorgesehen ist. Denkbar sind aber auch andere Schlauchtüllen, die eine zylindrisch ausgebildete Innenfläche aufweisen und den Anschlussbereich des Rohres aufnehmen, wobei die Innenfläche mit der ersten Sicke oder mit einer Dichtung in Eingriff treten kann.

Die Schlauchtüllen können mit Anschlussenden versehen sein, die beispielsweise mit einem Schlauch verbindbar sind. Die Anschlussenden können gerade verlaufen oder einen Winkel bilden. Ferner sind auch mehrere nebeneinander angeordnete Anschlussenden denkbar, beispielsweise als T-Stück ausgebildet, die eine Verzweigung oder Weiche bilden.

Ein Anschlussteil kann auch als Verbindungsteil zweier Anschlussbereiche ausgebildet sein, so dass beide Ausgänge bzw. Eingänge des Anschlussteils gleich ausgebildet sind. Ferner kann der Anschlussteil auch als Weiche, Multikuppler oder Verteiler ausgebildet sein, so dass mehrere Anschlussbereiche verschiedener Rohre miteinander verbindbar sind.

Der Anschlussteil kann ferner auch als Endstück ausgebildet sein, so dass eine erfindungsgemäße Leitung mit einem derartigen Anschlussteil geschlossen werden kann. Derartige Endstücke können beispielsweise als Abschluss einer Spritzenleitung in einem Spritzengestänge verwendet werden.

Der Anschlussteil ist vorzugsweise mit einem Verbindungsstecker versehen. Der Verbindungsstecker kann genutzt werden, um eine axiale Sicherung des Anschlussteils auf dem Anschlussbereich zu erzielen. Dabei tritt der Verbindungsstecker mit der ersten Sicke in Eingriff.

Der Verbindungsstecker kann beispielsweise als Steckbolzen, Splint oder Steckbügel ausgebildet sein, beispielsweise als gebogener Draht oder als Kunststoffstecker bzw. Kunststoffbügel, der mittels Bohrungen am Anschlussteil geführt bzw. gehalten wird und mit der Sicke in Eingriff treten kann, sobald der Anschlussteil auf den Anschlussbereich geschoben wird. Dabei kann der Verbindungsstecker aus Metall, Kunststoff oder aus einem anderen geeigneten Material hergestellt sein. Der Verbindungsstecker verriegelt dabei den Anschlussteil auf dem Anschlussbereich, indem er an der ersten Sicke zur Anlage kommt. Ein axiales Verschieben bzw. ein Abziehen des Anschlussteils vom Anschlussbereich ist erst möglich, wenn der Verbindungsstecker gelöst wird.

Eine erfindungsgemäße Leitung ermöglicht aufgrund der Ausbildung des Anschlussbereichs und der vielfältigen Ausbildungsmöglichkeiten von Anschlussteilen eine modulare Bauart des gesamten Leitungsapparates einer Spritzmaschine.

Eine erfindungsgemäße Leitung kann vorzugsweise mit Ausbringöffnungen versehen sein, aus denen eine zu versprühende Flüssigkeit austreten kann und beispielsweise auf den Pflanzenbestand eines Feldes verteilt werden kann. Die Ausbringöffnungen können über die Breite des Spritzengestänges verteilt, entlang der Leitung angeordnet sein. Die Ausbringöffnungen sind vorzugsweise als Düsen ausgebildet oder mit solchen versehen, so dass beispielsweise eine Zerstäuberwirkung oder durch Verstellen bzw. Austauschen von Düsen unterschiedliche Ausbringmengen erzielbar sind.

Eine erfindungsgemäße Leitung findet beispielsweise Anwendung in einer landwirtschaftlichen Spritze, welche über ein Spritzengestänge zum Ausbringen von Flüssigkeit verfügt. Dabei kann es sich beispielsweise um eine von einem Schlepper gezogene Spritze oder um eine an den Schlepper anbaubare Anbauspritze handeln. Des Weiteren können landwirtschaftliche Spritzen auch als sogenannte Selbstfahrer ausgebildet sein. Ferner ist auch die Ausbildung einer erfindungsgemäßen Leitung an einer als Verteilmaschine für Dünger ausgebildeten landwirtschaftlichen Spritze denkbar.

Anhand der Zeichnung, die ein Ausführungsbeispiel der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine Seitenansicht einer landwirtschaftlichen Spritze mit einem eine erfindungsgemäße Leitung aufweisenden Spritzengestänge,
- Fig. 2: eine Querschnittsansicht einer Verbindung eines Anschlussbereichs einer erfindungsgemäßen Leitung mit einem Schlauch,
- Fig. 3: eine Querschnittsansicht einer Verbindung eines Anschlussbereichs einer erfindungsgemäßen Leitung in einem weiteren Ausführungsbeispiel mit einem als Schlauchtülle ausgebildeten Anschlussteil,
- Fig. 4: eine Draufsicht der Verbindung aus Figur 3,
- Fig. 5: eine Frontansicht des Anschlussteils aus den Figuren 3 und 4,
- Fig. 6: eine Querschnittsansicht einer Verbindung zweier Anschlussbereiche einer erfindungsgemäßen Leitung in einem weiteren Ausführungsbeispiel mit einem als Verbindungsstück ausgebildeten Anschlussteil und
- Fig. 7: eine Querschnittsansicht einer Verbindung eines Anschlussbereichs einer erfindungsgemäßen Leitung in einem weiteren Ausführungsbeispiel mit einem als Endstück ausgebildeten Anschlussteil.

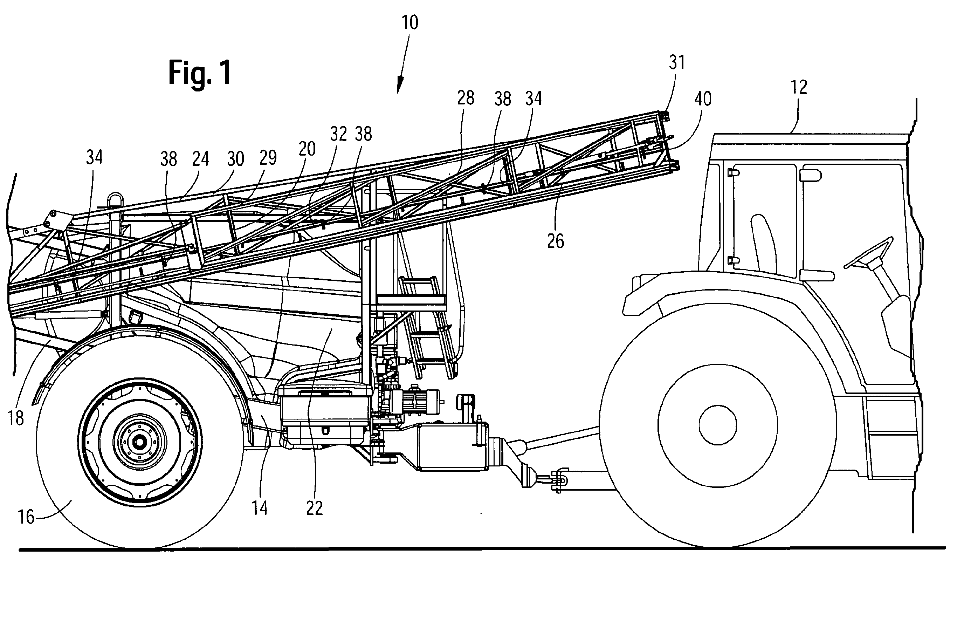

Figur 1 zeigt eine landwirtschaftliche Spritze 10 in Form von einer von einem Schlepper 12 gezogenen Anhängespritze. Die Spritze 10 weist einen Rahmen 14 mit Rädern 16 auf. An den Rahmen 14 ist eine Parallelogrammgestänge 18 montiert, welches ein Spritzengestänge 20 trägt. Ferner ist die Spritze 10 mit einem am Rahmen 14 montierten Tank 22 versehen.

Das Spritzengestänge 20 weist obere und untere Träger 24, 26 auf, die über zahlreiche Verstrebungen 28 miteinander verbunden sind und ein Fachwerk bilden. Das Spritzengestänge 20 setzt sich aus mehreren Teilbereichen 29, 30 zusammen, die über Scharniere 31 miteinander verbunden sind und sich beidseitig der Spritze 10 erstrecken. Durch die Scharniere 31 kann das Spritzengestänge 20 in eine Transportstellung zusammengefaltet (wie in Figur 1 dargestellt) oder in eine Betriebsstellung auseinandergefaltet werden.

Das Spritzengestänge ist mit Leitungen 32 versehen, die sich beidseitig der Spritze 10 entlang des Spritzengestänges 20 erstrecken. Die Leitungen 32 weisen Rohre 34 auf, die mit Ausbringöffnungen 36 in Form von Düsen versehen sind. Die Rohre 34 sind mit Versorgungs- und Rückführschläuchen (nicht gezeigt) verbunden, die zu versprühende Flüssigkeit vom Tank 22 in die Rohre 34 bzw. aus den Rohren 34 zum Tank 22 leiten.

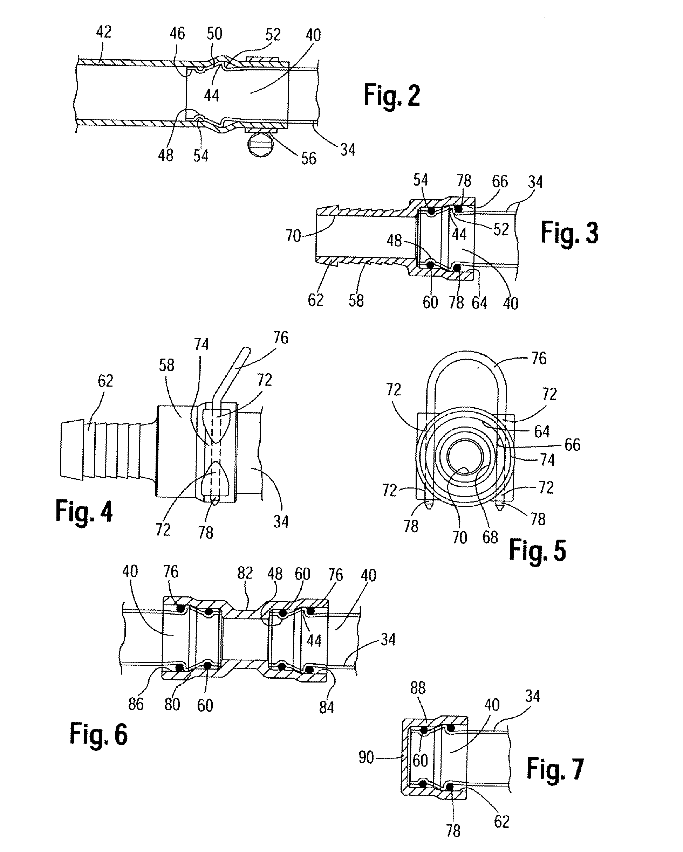

Die Rohre 34 weisen Anschlussbereiche 40 auf, in denen die Rohre 34 miteinander und/oder mit den Versorgungs- und Rückführschläuchen verbunden werden, wie detailliert in den Figuren 2 bis 7 dargestellt ist.

Figur 2 zeigt ein erfindungsgemäßes Ausführungsbeispiel für eine Verbindung des Rohres 34 bzw. des Anschlussbereichs 40 mit einem als Schlauch ausgebildeten Anschlussteil 42. Der Anschlussbereich 40 des Rohres 34 weist eine sich über den gesamten Umfang des Anschlussbereichs 40 radial zur Längsachse des Rohres 34 nach außen erstreckende erste Sicke 44 und eine Öffnung 46 auf. Zwischen der Öffnung 46 und der ersten Sicke 44 ist eine sich über den gesamten Umfang des Anschlussbereichs 40 erstreckende zweite Sicke 48 ausgebildet. Der Anschlussteil 42 weist einen Innendurchmesser auf, der im Wesentlichen dem Außendurchmesser der Öffnung 46 entspricht. Die erste Sicke 44 ist auf der in Richtung der Öffnung weisenden Seite angeschrägt ausgebildet, so dass der Außendurchmesser in einem Übergangsbereich 50 langsam zunimmt. An der entgegengesetzten Seite ist die Sicke 44 mit einem schroffen Übergang versehen, durch den eine sich radial zur Längsachse des Rohres 34 erstreckende Ringfläche 52 ausgebildet wird. Die zweite Sicke 48 ist entgegengesetzt zur ersten Sicke 44 radial zur Längsachse des Rohres 34 nach innen ausgebildet und weist einen symmetrischen Verlauf, durch den auf der Außenfläche des Anschlussbereichs 40 eine gleichförmige sich radial nach innen erstreckende Ringnut 54 ausgebildet ist. Ferner ist der Anschlussteil 42 ausgehend von der Öffnung 46 hinter der ersten Sicke 44 mit einer Schlauchschelle 56 versehen. Die Verbindung wird dadurch hergestellt, dass der Anschlussteil 42 über den Anschlussbereich 40 geschoben wird und mit der ersten Sicke 44 dadurch in Eingriff tritt, dass er durch die Sicke 44 gedehnt wird und eine dementsprechende Anpresskraft auf die Sicke 44 ausübt. Durch die Anpresskraft wird der Anschlussteil 42 auf dem Anschlussbereich 40 fixiert. Zusätzlich ist der Anschlussteil 42 durch die Schlauchschelle 56 gesichert.

In Figur 3 bis 5 ist ein weiteres Ausführungsbeispiel dargestellt, in dem eine Verbindung zwischen dem Anschlussbereich 40 und einem als Schlauchtülle ausgebildeten Anschlussteil 58 dargestellt ist. Die Ausbildung des Anschlussbereichs 40 bzw. die Ausbildung und Anordnung der Sicken 44, 48 gleicht dabei den Ausführungen des vorangegangenen Ausführungsbeispiels (Figur 2). Des Weiteren ist hier ein Dichtring 60 vorgesehen, der von der durch die zweite Sicke 48 ausgebildeten Ringnut 54 aufgenommen wird. Der Anschlussteil 58 weist ein Anschlussende 62 auf, an welches beispielsweise ein Schlauch (nicht gezeigt) befestigbar ist. Der Anschlussteil 58 umfasst eine Öffnung 64, die außen einen ersten Durchmesser 66 aufweist, der in etwa dem Außendurchmesser der ersten Sicke 44 entspricht. Daran anschließend verjüngt sich die Öffnung 64 auf einen zweiten Durchmesser 68, der geringfügig kleiner als der Außendurchmesser des Dichtrings 60 ist. Daran anschließend verjüngt sich die Öffnung auf einen dritten Durchmesser 70, der gleichzeitig den Innendurchmesser des Anschlussendes 62 darstellt. Im Bereich des ersten Durchmessers 66 sind beidseitig der Öffnung 64 sich gegenüberliegende Bohrungen 72 vorgesehen, die sich quer und tangential zur Längsachse des Rohres durch eine Wandung 74 der Öffnung 64 erstrecken. Ferner ist ein als Drahtbügel oder Kunststoffbügel ausgebildeter Verbindungsstecker 76 vorgesehen der zwei sich parallel erstreckende Schenkel 78 aufweist. Der Anschlussteil 58 wird zur Verbindung mit dem Anschlussbereich 40 auf den Anschlussbereich 40 geschoben. Durch das Aufschieben tritt die Innenseite des Anschlussteils 58 im Bereich des zweiten Durchmessers 68 mit dem Dichtring in Eingriff und dichtet den Anschlussbereich 40 nach außen hin ab. Der Anschlussteil 58 wird so weit auf den Anschlussbereich geschoben, bis die Bohrungen 72 hinter die erste Sicke 44 gelangen, so dass der Verbindungsstecker 76 mit seinen Schenkeln 78 durch die Bohrungen 72 geschoben und mit der ersten Sicke 44 in Eingriff treten kann. Der Verbindungsstecker 76 tritt mit der Sicke 44 dabei derart in Eingriff, dass die Schenkel 78 auf der an der ersten Sicke 44 ausgebildeten Ringfläche 52 zur Anlage kommen, sobald Anschlussteil 58 und Anschlussbereich 40 auseinander gedrängt werden. Durch die Anlage der Schenkel 78 auf der Ringfläche 52 ist somit eine axiale Sicherung des Anschlussteils 58 gegeben.

In Figur 6 ist ein weiteres Ausführungsbeispiel dargestellt, in dem eine Verbindung zwischen den Anschlussbereichen 40 zweier Rohre 34 und einem als Verbindungsstück ausgebildeten Anschlussteil 80 dargestellt ist. Die Ausbildung der Anschlussbereiche 40 bzw. die Ausbildung und Anordnung der Sicken 44, 48 und der Dichtungen 60 gleichen dabei den Ausführungen des vorangegangenen Ausführungsbeispiels (Figuren 3 bis 5). Der Anschlussteil 80 ist derart ausgebildet, dass im Vergleich zum vorangegangenen Ausführungsbeispiel kein Anschlussende 62 vorgesehen ist, sondern das Anschlussteil 80 ein Verbindungsrohr 82 aufweist, welches zwei spiegelbildlich zueinander angeordnete Öffnungen 84, 86 miteinander verbindet. Die Öffnungen 84, 86 sind dabei entsprechend der Öffnung 64 aus dem vorangegangenen Ausführungsbeispiel ausgebildet. Der Anschlussteil 80 verbindet somit zwei Rohre mit jeweils einem ausgebildeten Anschlussbereich 40 miteinander. Über die Dichtringe 60 werden die Rohre nach außen hin abgedichtet. Die Verbindungsstecker 76 sichern die Verbindung.

In Figur 7 ist ein weiteres Ausführungsbeispiel dargestellt, in dem eine Verbindung zwischen dem Anschlussbereich 40 eines Rohres 34 und einem als Endstück ausgebildeten Anschlussteil 88 dargestellt ist. Die Ausbildung des Anschlussbereichs 40 bzw. die Ausbildungen und Anordnungen der Sicken 44, 48 und die der Dichtung 60 gleichen dabei den Ausführungen der beiden vorangegangenen Ausführungsbeispiele (Figuren 3 bis 6). Der Anschlussteil 88 ist derart ausgebildet, dass im Vergleich zu den vorangegangenen Ausführungsbeispielen bezüglich der Figuren 3 bis 5 das Anschlussende 62 durch eine Abschlussplatte 90 geschlossen ist. Dadurch kann das Rohr 34 bzw. der Abschlussbereich 40 nach außen hin über den Dichtring 60 und die Abschlussplatte 90 abgedichtet und über den Verbindungsstecker 76 verschlossen werden.

Auch wenn die Erfindung lediglich anhand von vier Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Spritzengestängeleitung, umfassend wenigstens ein einen Anschlussbereich (40) aufweisendes Rohr (34) und wenigstens einen Anschlussteil (42, 58, 80, 88), wobei der Anschlussbereich (40) mit dem Anschlussteil (42, 58, 80, 88) verbunden ist und der Anschlussbereich (40) mit einer ersten nach außen gerichteten Sicke (44) ausgebildet ist, mit welcher der Anschlussteil (42, 58, 80, 88) in Eingriff tritt, **dadurch gekennzeichnet, dass** der Anschlussbereich mit einer zweiten Sicke (48) versehen ist, wobei die zweite Sicke (48) zwischen der ersten Sicke (44) und einer Öffnung (46) des Rohres (34) angeordnet und nach innen gerichtet ist.

2. Spritzengestängeleitung nach Anspruch 1, **dadurch gekennzeichnet, dass** die zweite Sicke (48) mit einem Dichtring (60) versehen ist.

3. Spritzengestängeleitung nach einem der vorhergehenden Ansprüche, **dadurch gekennzeichnet, dass** der Anschlussteil (42) als ein über die erste Sicke geschobener Schlauch ausgebildet ist.

4. Spritzengestängeleitung nach einem der vorhergehenden Ansprüche, **dadurch gekennzeichnet, dass** der Anschlussteil (58) als Schlauchtülle ausgebildet ist.

5. Spritzengestängeleitung nach einem der vorhergehenden Ansprüche, **dadurch gekennzeichnet, dass** der Anschlussteil (80) als Verbindungsteil zweier oder mehrerer Anschlussbereiche (40) verschiedener Rohre (34) ausgebildet ist.

6. Spritzengestängeleitung nach einem der vorhergehenden Ansprüche, **dadurch gekennzeichnet, dass** der Anschlussteil (88) als ein die Anschlussöffnung (64) verschließendes Endstück ausgebildet ist.

7. Spritzengestängeleitung nach einem oder mehreren der vorhergehenden Ansprüche, **dadurch gekennzeichnet, dass** der Anschlussteil (58, 80, 88) einen Verbindungsstecker (76) aufweist, der mit der ersten Sicke (44) in Eingriff tritt.

8. Spritzengestängeleitung nach Anspruch 7, **dadurch gekennzeichnet, dass** der Verbindungsstecker (76) als Steckbolzen, Splint oder Steckbügel, insbesondere als Drahtbügel oder Kunststoffbügel ausgebildet ist, der an der ersten Sicke (44) zur Anlage kommt und den Anschlussteil (58, 80, 88) an den Anschlussbereich (40) koppelt.

9. Spritzengestängeleitung nach einem oder mehreren der vorhergehenden Ansprüche, **dadurch gekennzeichnet, dass** die Spritzengestängeleitung (32) eine oder mehreren Ausbringöffnungen (36), insbesondere Düsen aufweist.

10. Landwirtschaftliche Spritze mit einem Spritzengestänge (20) zum Ausbringen von Flüssigkeit, insbesondere Pflanzenschutzmittel, **gekennzeichnet durch** wenigstens eine Spritzengestängeleitung (32) nach einem oder mehreren der vorhergehenden Ansprüche.

## Claims

1. Spray boom line, comprising at least one pipe (34) having a connection region (40), and at least one connection part (42, 58, 80, 88), wherein the connection region (40) is connected to the connection part (42, 58, 80, 88) and the connection region (40) is formed with a first outwardly directed bead (44) with which the connection part (42, 58, 80, 88) comes into engagement, **characterized in that** the connection region is provided with a second bead (48), wherein the second bead (48) is arranged between the first bead (44) and an opening (46) in the pipe (34) and is directed inwards.

2. Spray boom line according to Claim 1, **characterized in that** the second bead (48) is provided with a sealing ring (60).

3. Spray boom line according to either of the preceding claims, **characterized in that** the connection part (42) is formed as a hose that can be pushed over the first bead.

4. Spray boom line according to one of the preceding claims, **characterized in that** the connection part (58) is formed as a hose nozzle.

5. Spray boom line according to one of the preceding claims, **characterized in that** the connection part (80) is formed as a connecting part for two or more connection regions (40) of different pipes (34).

6. Spray boom line according to one of the preceding claims, **characterized in that** the connection part (88) is formed as an end piece that closes the connection opening (64).

7. Spray boom line according to one or more of the preceding claims, **characterized in that** the connection part (58, 80, 88) has a connecting plug (76) which comes into engagement with the first bead (44).

8. Spray boom line according to Claim 7, **characterized in that** the connecting plug (76) is formed as a plug-in bolt, splint or stirrup, in particular as a wire stirrup or plastics stirrup, which comes into abutment against the first bead (44) and couples the connection part (58, 80, 88) to the connection region (40).

9. Spray boom line according to one or more of the preceding claims, **characterized in that** the spray boom line (32) has one or more discharge openings (36), in particular nozzles.

10. Agricultural sprayer having a spray boom (20) for discharging liquid, in particular crop protection agent, **characterized by** at least one spray boom line (32) according to one or more of the preceding claims.

## Revendications

1. Conduite de rampe de pulvérisation, comprenant au moins un tube (34) présentant une zone de raccordement (40) et au moins une pièce de raccordement (42, 58, 80, 88), dans laquelle la zone de raccordement (40) est assemblée à la pièce de raccordement (42, 58, 80, 88) et la zone de raccordement (40) est réalisée avec une première moulure (44) orientée vers l'extérieur, avec laquelle la pièce de raccordement (42, 58, 80, 88) vient en prise, **caractérisée en ce que** la zone de raccordement est munie d'une deuxième moulure (48), dans laquelle la deuxième moulure (48) est disposée entre la première moulure (44) et une ouverture (46) du tube (34) et est orientée vers l'intérieur.

2. Conduite de rampe de pulvérisation selon la revendication 1, **caractérisée en ce que** la deuxième moulure (48) est munie d'un joint d'étanchéité torique (60).

3. Conduite de rampe de pulvérisation selon l'une quelconque des revendications précédentes, **caractérisée en ce que** la pièce de raccordement (42) est réalisée sous la forme d'un tuyau souple engagé sur la première moulure.

4. Conduite de rampe de pulvérisation selon l'une quelconque des revendications précédentes, **caractérisée en ce que** la pièce de raccordement (58) est réalisée sous la forme d'une douille en tuyau souple.

5. Conduite de rampe de pulvérisation selon l'une quelconque des revendications précédentes, **caractérisée en ce que** la pièce de raccordement (80) est réalisée sous la forme d'une pièce de jonction de deux ou plusieurs zones de raccordement (40) de tubes différents (34).

6. Conduite de rampe de pulvérisation selon l'une quelconque des revendications précédentes, **caractérisée en ce que** la pièce de raccordement (88) est réalisée sous la forme d'une pièce d'extrémité fermant l'ouverture de raccordement (64).

7. Conduite de rampe de pulvérisation selon une ou plusieurs des revendications précédentes, **caractérisée en ce que** la pièce de raccordement (58, 80, 88) présente une fiche de jonction (76), qui vient en prise avec la première moulure (44).

8. Conduite de rampe de pulvérisation selon la revendication 7, **caractérisée en ce que** la fiche de jonction (76) est réalisée sous la forme d'un piton enfichable, d'une goupille ou d'un étrier enfichable, en particulier d'un étrier en fil ou d'un étrier en plastique, qui vient s'appliquer sur la première moulure (44) et couple la pièce de raccordement (58, 80, 88) à la zone de raccordement (40).

9. Conduite de rampe de pulvérisation selon une ou plusieurs des revendications précédentes, **caractérisée en ce que** la conduite de rampe de pulvérisation (32) présente un ou plusieurs orifices de sortie (36), en particulier des buses.

10. Lance de pulvérisation agricole avec une rampe de pulvérisation (20) destinée à projeter un liquide, en particulier un agent de protection des plantes, **caractérisée par** au moins une conduite de rampe de pulvérisation (32) selon une ou plusieurs des revendications précédentes.
